Europäisches Patentamt

European Patent Office

Office européen des brevets

(11) Publication number: 0 580 214 A2

## EUROPEAN PATENT APPLICATION

(21) Application number: 93201994.6

(22) Date of filing: 08.07.93

(51) Int. Cl.5: A23L 1/16

(30) Priority: 21.07.92 IT MI921762

(43) Date of publication of application:
26.01.94 Bulletin 94/04

(84) Designated Contracting States:
AT BE CH DE DK ES FR GB GR IE IT LI LU NL PT SE

(71) Applicant: M.G. BRAIBANTI S.p.A.
Largo Toscanini, 1
I-20122 Milan(IT)

(72) Inventor: Dalbon, Gerardo
Via IV Novembre 8
I-38080 Dare'(Trento)(IT)

(74) Representative: De Carli, Erberto
ING. BARZANO' & ZANARDO MILANO S.p.A.
Via Borgonuovo, 10
I-20121 Milano (IT)

(54) Process for drying alimentary pasta.

(57) The present invention relates to a process for drying alimentary pasta ("pasta"), consisting of four steps: (a) fast preliminary drying, i.e., first drying, (b) drying, (c) thermal treatment, (d) cooling, which process comprises, in the order as stated, in its step (a) of rapid skin drying, i.e., first drying, the substeps of:

(1) pre-drying,
(2) quick heating,
(3) enzyme deactivation,

in its drying step (b), the substeps of:

(4) second drying,
(5) third drying, and

in its thermal treatment step (c), the substeps of:

(6) end stabilization,
(7) moistening.

Such a process results to be a particularly advantageous one, because it makes it possible the cooking quality of pasta to be improved, with the thermal damage being simultaneously limited.

Fig.1

EP 0 580 214 A2

The present invention relates to a process for drying alimentary pasta ("pasta") and, in particular, long pasta.

From the prior art industrial processes are known in order to dry pasta, which take place according to a classic scheme. According to such a scheme, as the drying of pasta proceeds, temperature is increased up to 80°C-90°C and even higher, with drying times comprised within the range of from 4 to 6 hours.

During the end portion of the drying cycle, temperature is generally kept at round 75°C-85°C, in order to secure a high cooking quality of pasta.

In fact, it is well-known that in order to obtain optimal results during the thermal treatment of pasta, it is necessary that the moisture level of said pasta is comprised within the range of from 12% to 14%.

The recent developement of an analytical system which makes it possible to quantitatively determine the thermal damage suffered by pasta owing to a drying cycle, has evidenced a meaningful loss of biologic value of pasta proteins, if pasta is treated under such conditions as to obtain the maximal improvement in cooking quality (in fact, losses of lysine were detected which may be as high as 30-40% of total lysine content).

Such a loss of biological value is due to the Maillard's reaction, which takes place between aminoacid lysine and the reducing sugars present in the raw material.

The intensity of said reaction depends on the type of thermal treatment during the drying process and on the aptitude of pasta to undergo the Maillard's reaction.

It is precisely during the step of fast preliminary drying, i.e., first drying, that the conditions may occur which cause an increase in pasta aptitude to undergo the Maillard's reaction because it is during this step that alpha-amylases may act on starch and produce reducing sugars.

In the traditional fast preliminary drying steps, this extremely important aspect is not taken into account and pasta is caused to rest for meaningfully long times (30-50 minutes) at temperatures comprised within the range of from 50°C to 65°C. At the latter temperature, the enzymatic activity is 5 times as high as the enzymatic activity at 45°C, and the stay time of pasta at the temperatures of highest enzymatic activity should be consequently kept at a minimum.

The optimal behaviour would be heating pasta at amylases deactivation temperature immediately after being extruded. In the case of short pasta ("macaroni"), this is easily obtained and, in fact, is already carried out. In the case of long pasta and, in particular, "spaghetti" (noodles), considerable objective difficulties exist, because said spaghetti are laying on supports.

In fact, hot air used in order to dry pasta, which flows through pasta from top downwards or vice-versa, on considering that noodles are 50 cm long, is the more cooled, the higher the temperature difference is between air and pasta.

Such a temperature drop (higher than 15°C) also causes a very meaningful increase to take place in relative air humidity. As a consequence, the treatment conditions between "spaghetti" (noodles) heads and bottoms are considerably different, with the result that, at those sides where hot air arrives, the risk exists of a too fast evaporation with consequent noodle cracking, whilst on the opposite side, excessively humid air may cause water condensation to take place on pasta with consequent sticking of said spaghetti.

Such phenomena result to be the more marked, the higher the pasta moisture level is.

It is furthermore known, as regards drying, that, with temperature and times being the same, the Maillard's reaction is more intense at low pasta moisture level values (16-12%), i.e., exactly under the most favourable conditions for obtaining a meaningful improvement in cooking quality. The present cycles tend to apply favourable temperatures for Maillard's reaction precisely when pasta has such moisture level values.

The processes known from the prior art do not make it possible a high cooking quality to be combined with a high biological value of pasta. In fact, although they realize considerable improvements in cooking quality, such known processes obtain always a product with a high loss of biological value.

The purpose of the present invention is of obviating the above indicated drawbacks.

Such a purpose is achieved by means of a process for drying alimentary pasta ("pasta"), which consists of four steps: (a) fast preliminary drying, i.e., first drying ("incartamento"), (b) drying, (c) thermal treatment, (d) cooling, which process comprises, in the order as stated, in its step (a) of fast preliminary drying, i.e., first drying, the substeps of:

(1) pre-drying,
(2) quick heating,
(3) enzyme deactivation,

in its drying step (b), the substeps of:

(4) second drying,
(5) third drying, and

in its heat treatment step (c), the substeps of:

2

(6) end stabilization,

(7) moistening.

The main advantage of the process according to the present invention consists in the improvement in pasta cooking quality, with simultaneously the intensity of the Maillard's reaction being simultaneously limited, by means of an optimization of the drying cycle, so as to secure an effective thermal treatment.

The aptitude of pasta to undergo the Maillard's reaction is furthermore reduced by means of an optimization of the fast preliminary drying, or first drying, step.

The technical features and the further advantages of the present invention will be clearer from the following illustrative disclosure made by referring to the acccompanying figures.

Figure 1 is a schematic view of the sequence of substeps which take place during the step (a) of fast preliminary drying, or first drying.

Figure 2 is a schematic view of a drying unit for the drying cycle according to the present invention.

Figure 3 and Figure 4 are two schematic views of drying unit variants for practicing the process according to the present invention.

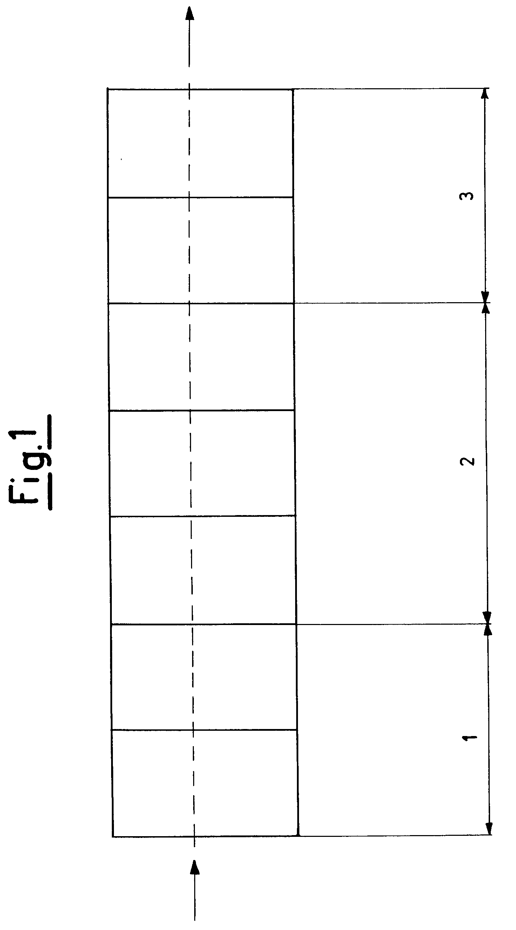

In Figure 1, which represents the step (a) of fast preliminary drying, or first drying, three different zones are indicated in which the three substeps which compose said step (a), and, namely: (1) pre-drying; (2) fast pre-heating; (3) enzyme deactivation, are carried out.

The fast preliminary drying or first drying step (a), as previously mentioned, is particularly important for the purpose of optimizing the end product, and during the substep (1) of pre-drying, according to the present invention, pasta, coming from the production press, is submitted to a fast evaporation for a time comprised within the range of from 0 minutes to 25 minutes, at a temperature comprised within the range of from 30°C to 60°C, i.e., under temperature conditions which limit the enzymatic activity. At the end of this step, pasta displays a suitable structure for the subsequent fast heating treatment.

The above said substep (1) is preferably carried out at a temperature comprised within the range of from 43°C to 47°C, for 15 minutes, with a 5-point decrease in pasta moisture level.

In the rapid pre-heating substep (2), pasta must be heated up to a higher temperature than 75°C as rapidly as possible, within a time period comprised within the range of from 30 seconds to 25 minutes. Such a heating may be carried out by means of traditional systems, or by means of microwaves or further systems, or by means of mixed systems.

In particular, according to a first embodiment, said substep (2) is preferably carried out during a 15 minute time, with a decrease in pasta moisture level of 3.5 points and a temperature increase, during 3 heating stages of 5 minutes each, from 45°C to 60°C during the first stage, from 60°C to 71°C during the second stage, from 71°C to 82°C during the third stage, under traditional ventilation conditions from top downwards.

According to a second embodiment, said substep (2) is carried out during a time comprised within the range of from 20 to 400 seconds, with a decrease in pasta moisture level of from 0 to 3 points and a temperature increase of 25°C-40°C, during three stages, with perpendicular ventilation to the movement of the noodle support, optionally coupled with a microwave system. In particular, said substep (2) in said second embodiment is preferably carried out for 40 seconds, with a decrease in moisture level of 1.5 points and with a temperature increase of 35°C.

During the substep (3) of enzyme deactivation, pasta is heated up to a temperature comprised within the range of from 80°C to 110°C during a time comprised within the range of from 15 to 90 minutes, with a decrease in pasta humidity level of 3-8 points.

In particular, said step (3) is preferably carried out at a temperature of 85°C for 15 minutes, with a decrease in pasta humidity level of 3 points.

Pasta is then fed to the drying unit.

The drying step (b) displays a critical end substep. In other terms, the substep during which pasta humidity level is decreased from 14% to 12% is of basic importance in order to define the end product characteristics.

Differently from the prior art, in which very short drying times are used which require high temperatures to be applied during the whole drying step, according to the process of the present invention, the drying step is carried out at relatively low temperatures (70-80°C), with the drying times being proportionally extended.

The substep (4) during which pasta is submitted to the second drying until the humidity thereof is decreased down to about 14-16%, is carried out at a temperature comprised within the range of from 85°C to 100°C, over a time comprised within the range of from 30 to 120 minutes.

Such a substep (4) is carried out at 85°C for 50 minutes, until a humidity level of 15% is reached in the product.

Pasta is then submitted to the substep (5) of the process according to the present invention: such a substep (5) consists of a third drying which makes it possible the moisture level in the product to be decreased from 15% to 12% and is carried out at a temperature comprised within the range of from 70°C up to a maximal value of 85°C.

The drying of substep (5) is preferably carried out for 1 hour at 78°C.

The step (c) of thermal tretament is of basic importance in order to improve the cooking quality of pasta.

For long time it has been known that the maximal improvement in cooking quality is obtained by means of treatments carried out on low-moisture pastas, i.e., for pastas which display a moisture level of 12.5%. Unfortunately, these are the same conditions which also favour the Maillard's reaction, i.e., cause the loss in biological value.

By means of the process according to the present invention, a deep thermal treatment can be carried out in the stabilization substep (6), thus limiting the thermal damage and simultaneously securing that a pasta with a very good cooking quality will be obtained.

The end stabilization substep (6) is carried out at a temperature comprised within the range of from 75 to 80°C, for 1-5 hours, with a constant moisture level in the product.

Said substep (6) is preferably carried out at 82°C for for 3 hours.

The second substep of the thermal treatment step, i.e., the substep (7) of moistening is very important in order to increase the stability of the product and eliminate any risks of deformations or cracking whereas does not have any importance as regards the reduction in thermal damage.

Such a substep (7) is carried out at a temperature which is 2-20°C lower than the temperature of the stabilization substep (6). In particular, during the moistening step pasta should absorb from 0.1 to 3.0 points of moisture.

Preferably, during said substep (7), pasta absorbs 0.5 moisture points.

Then an end step (d) of pasta cooling is carried out.

In order to illustrate the disclosed system in greater detail, in the following table an example of a drying cycle according to the present invention is presented in the case of noodles having a diameter of 1.8 mm.

## T a b l e

| | Time (min.) | Initial temp. (°C) | End temp. (°C) | Initial moisture level | End moisture level |
|---|---|---|---|---|---|
| (a) with traditional ventilation from top downwards | | | | | |
| Pre-drying | 15 | 45 | 45 | 30 | 24.5 |
| Heating | 15 | 45 | 85 | 24.5 | 21 |

## T_a_b_l_e (continuation)

| | Time (min.) | Initial temp. (ºC) | End temp. (ºC) | Initial moisture level | End moisture level |
|---|---|---|---|---|---|
| Enzyme deacti vation | 15 | 85 | 88 | 21 | 18 |
| (b) with ventilation perpendicular to the movement of the support | | | | | |
| Pre-drying | 2 | 40 | 45 | 30 | 29 |
| Heating | 50* | 45 | 75 | 29 | 27.5 |
| Enzyme deacti vation | 38 | 80 | 88 | 27.5 | 18 |
| Treatments shared by (a) and (b) | | | | | |
| Second drying | 50 | 86 | 86 | 18 | 14.5 |
| Third drying | 60 | 78 | 78 | 14.5 | 12.5 |
| Thermal treat ment and end stabilization | 180 | 82 | 82 | 12.5 | 12.5 |
| Moistening | 8 | 82 | 80 | 12.5 | 12.9 |
| Cooling | 20 | 80 | 30 | 12.9 | 12.6 |

\* seconds

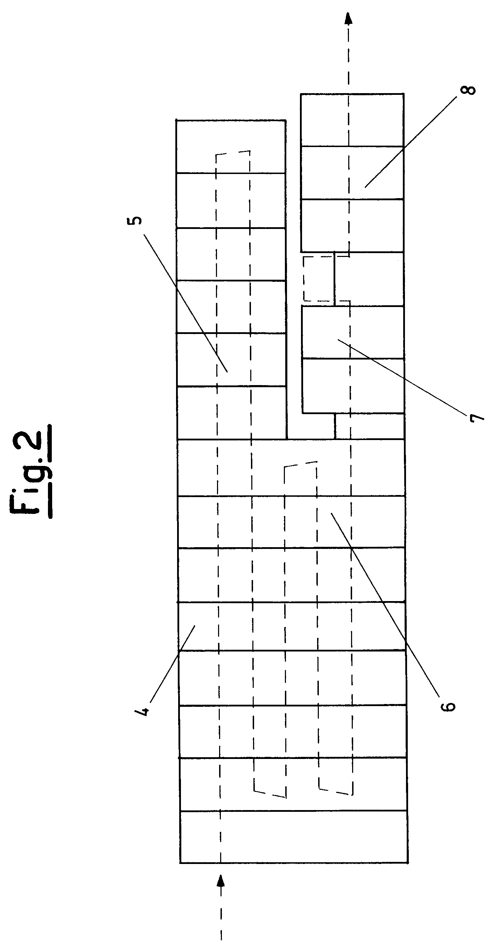

In Figure 2 a device is schematically displayed which is used in order to implement the drying cycle according to the present invention. In said schematic flow chart, pasta, coming from the fast preliminary drying step, i.e., the first drying step, shown in Figure 1, in which the substeps (1)-(3) of the process according to the present invention took place, enters a tunnel body in which three zones (4), (5) and (6) are indicated.

In zones (4) and (5), pasta is dried and in particular in zone (4) the second drying takes place at a higher temperature, and in zone (5), situated in an extension of the drying unit, the third drying at lower temperature takes place. In zone (6), pasta, by running through the second, third, fourth and fifth floors of the tunnel body, undergoes the thermal treatment for product stabilization.

Product drying and thermal treatment take place thanks to a particular ventilation and regulation system, and the measurement of relative air humidity (RH) is carried out by means of a sensor installed immediately under pasta, at the lowermost floor. In particular, air heating is obtained by means of a set of heating elements installed above the first floor on which pasta moves and the air stream flows through the floors from top downwards.

This arrangement makes it possible use of steam to be avoided, because the moisture released by pasta which runs along the first floor, reaches the lower floors together with the ventilation air stream.

Then, in a subsequent zone (7), pasta is moistened, then is caused to leave the system, and enters again the system at a zone (8) in which the cooling takes place. The resulting pasta product is then sent to the storage silo.

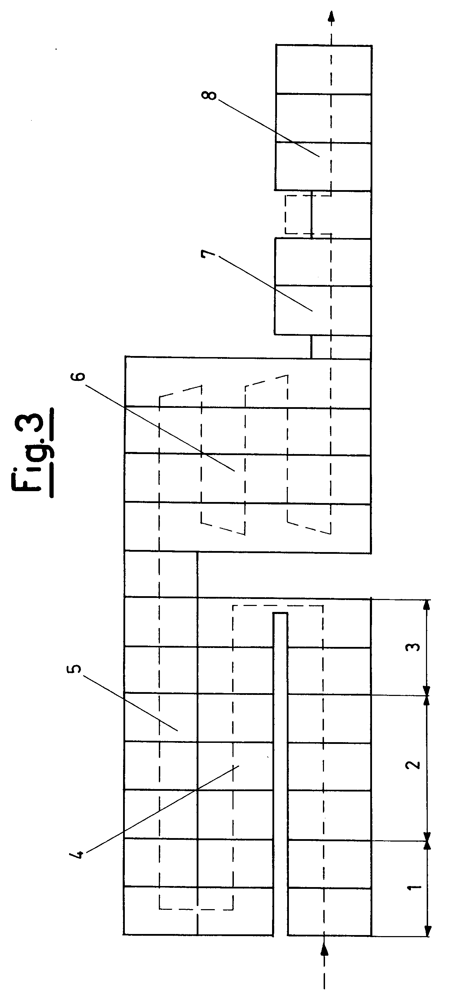

In Figure 3, a different embodiment of a drying unit for implementing the drying cycle according to the present invention is schematically displayed. In this drying unit, pasta, coming from press, flows through the zones (1), (2) and (3), which are at all analogous to those as disclosed for Figure 2, and then reaches the zones (4) and (5), in which both drying steps are carried out, which zones (4) and (5) are arranged above the fast preliminary drying zone, i.e., the first drying zone, in order to be autonomously managed.

The zone (6), in which pasta is submitted to the end stabilization thermal treatment, is inside a five-floor separate drying unit, and zones (7) and (8) are at all analogous to as disclosed for Figure 2. Dried pasta product is then sent to the storage silo.

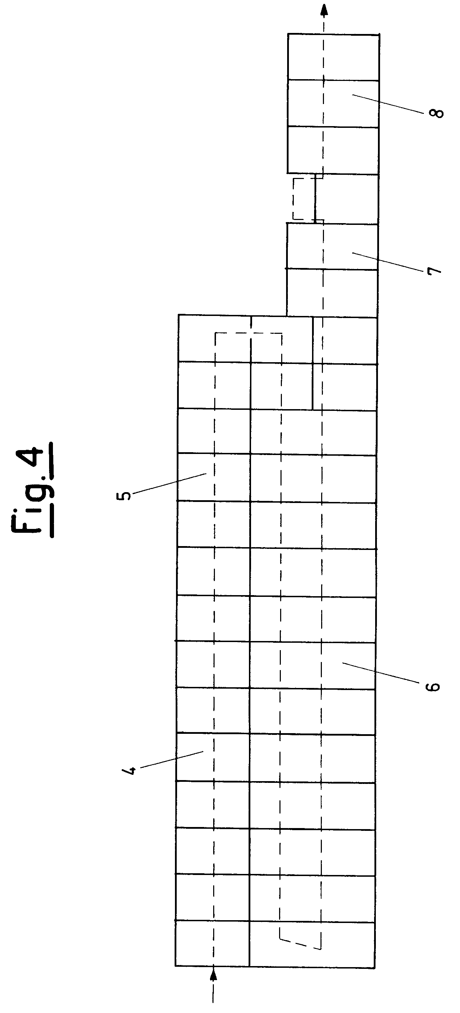

The schematic device of Figure 4 displays a similar structure to the system of Figure 2, with the only difference that zones (4) and (5), in which the second and third drying operations take place, are arranged inside a tunnel which lies on a floor above the stabilization thermal treatment zone.

Said stabilization thermal treatment zone (6) is arranged inside a double-floor drying unit, separated from the remainder of the system. Incoming pasta comes from the step of fast preliminary drying or first drying step, and, once dried, is sent to the storage silo.

The main advantage of the process according to the present invention consists in that the cooking quality of pasta product is improved, with the thermal damage being simultaneously reduced by 20-30%, as compared to the prior art.

Furthermore, in the pre-drying substep (1), pasta is submitted to a fast evaporation under temperature conditions which limit the enzymatic activity and consequently the concentration of sugars on which the extent depends of the loss in biological value, i.e., the thermal damage.

The deep thermal treatment performed in the end stabilization step of the drying cycle according to the present invention makes it consequently possible a product with a high biological value to be obtained simultaneously with an improvement in pasta cooking quality, which results to be optimal in a product with a moisture level of 12%.

The process according to the present invention can be furthermore carried out without using steam, because moisture released by pasta moving along the first floor of the drying unit, reaches the lower floors together with the ventilation air stream, and this feature results to be a particularly advantageous one owing to such reasons as already explained and, above all in the case of long pasta, because an optimal and homogeneous moisture level throughout the product can be obtained.

Furthermore, the several steps of the process are carried out at temperature values and for cycle times which results to be particularly advantageous.

**Claims**

1. Process for drying alimentary pasta ("pasta"), which consists of four steps: (a) fast preliminary drying, i.e., first drying, (b) drying, (c) heat treatment, (d) cooling, which process comprises, in the order as stated, during its step (a) of rapid skin drying, i.e., first drying, the substeps of:
   (1) pre-drying,
   (2) quick heating,
   (3) enzyme deactivation,
   in its drying step (b), the substeps of:
   (4) second drying,
   (5) third drying, and
   in its heat treatment step (c), the substeps of:
   (6) end stabilization,
   (7) moistening.

2. Process according to claim 1, characterized in that said pre-drying substep (1) provides for a fast evaporation at a temperature comprised within the range of from 30°C to 60°C, for a time comprised within the range of from 0 to 25 minutes.

3. Process according to claim 2, characterized in that said substep (1) is carried out at a temperature comprised within the range of from 43°C to 47°C, for 15 minutes, with a 5-point decrease in pasta moisture level.

4. Process according to claim 1, characterized in that said rapid pre-heating substep (2) is carried out at a higher temperature than 75°C as rapidly as possible, within a time comprised within the range of from 20 seconds to 25 minutes.

5. Process according to claim 4, characterized in that said substep (2) is carried out within 15 minutes, with a decrease in pasta humidity level of 3.5 points and a temperature increase, during three stages of 5 minutes each, from 45°C to 60°C during the first stage, from 60°C to 71°C during the second stage, from 71°C to 82°C during the third stage, under traditional ventilation conditions from top downwards.

6. Process according to claim 4, characterized in that said substep (2) is carried out during a time comprised within the range of from 20 to 400 seconds, with a decrease in humidity level of from 0 to 3 points and a temperature increase of 25°C-40°C, over three steps, with perpendicular ventilation to the movement of the support.

7. Process according to claim 6, characterized in that said substep (2) is preferably carried out for 40 seconds, with a decrease in pasta moisture level of 1.5 points and with a temperature increase of 35°C.

8. Process according to claim 4, characterized in that said pre-heating can be carried out by means of traditional systems or by using microwaves or mixed systems.

9. Process according to claim 1, characterized in that during said substep (3) of enzyme deactivation, pasta is heated up to a temperature comprised within the range of from 80°C to 110°C during a time comprised within the range of from 15 to 90 minutes, with a decrease in pasta moisture level of 3-8 points.

10. Process according to claim 9, characterized in that said substep (3) is carried out at 85°C for 15 minutes, with a decrease in pasta moisture level of 3 points.

11. Process according to claim 1, characterized in that said second drying substep (4) is carried out at a temperature comprised within the range of from 85°C to 100°C, during a time comprised within the range of from 30 to 120 minutes.

12. Process according to claim 11, characterized in that said substep (4) is carried out at 85°C, for 50 minutes, with a decrease in pasta moisture level down to a value of 15%.

13. Process according to claim 1, characterized in that said third drying substep (5) is carried out at a temperature comprised within the range of from 70 to 85°C, with a decrease in pasta moisture level from 15% down to 12%.

14. Process according to claim 13, characterized in that said step (5) is carried out at 78°C for 1 hour.

15. Process according to claim 1, characterized in that said end stabilization substep (6) is carried out at a temperature comprised within the range of from 75 to 80°C, for 1-5 hours, with the moisture level in pasta being kept constant.

16. Process according to claim 15, characterized in that substep (6) is carried out at 82°C for 3 hours.

17. Process according to claim 1, characterized in that said pasta moistening substep (7) is carried out at a temperature which is 2-20°C lower than the temperature of the stabilization step (6), with an increase in pasta moisture level of from 0.1 to 3 points.

18. Process according to claim 17, characterized in that said pasta moisture level increase is of 0.5 point.

# Fig.1

EP 0 580 214 A2

# Fig.2

Fig.3

# Fig. 4